# FASCICULE DE BREVET EUROPEEN

(11) **EP 1 233 869 B1**
(45) Date de publication et mention de la délivrance du brevet: **01.12.2004**
(21) Numéro de dépôt: 00975858.2
(22) Date de dépôt: 09.10.2000
(51) Int. Cl.: B60C 9/20

(54) **ARMATURE DE SOMMET POUR PNEUMATIQUE RADIAL**
SCHEITELBEWEHRUNG FÜR RADIALREIFEN
CROWN REINFORCEMENT FOR RADIAL TYRE

(30) Priorité: 08.11.1999 FR 9914093
(43) Date de publication de la demande: 28.08.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: BONDU, Lucien, F-63800 La Roche Noire (FR)
(74) Mandataire: Le Cam, Stéphane
(86) Numéro de dépôt international: PCT/EP2000/009864
(87) Numéro de publication internationale: WO 2001/034413

(56) Documents cités:
- EP-A- 0 730 987
- US-A- 4 989 659
- US-A- 5 111 864

## Description

La présente invention concerne un pneumatique à armature de carcasse radiale, destiné à équiper des véhicules lourds tels que camions, bus, tracteurs, remorques...etc.., et concerne plus particulièrement l'armature de sommet d'un tel pneumatique.

D'une manière générale, l'armature de carcasse radiale du pneumatique considéré, formée d'éléments de renforcement métalliques ou en polyamide aromatique inextensibles, est surmontée radialement d'une armature de sommet comprenant plusieurs nappes de sommet, en particulier une nappe de triangulation formée d'éléments métalliques orientés par rapport à la direction circonférentielle d'un angle important compris entre 45° et 90°, ladite nappe de triangulation étant elle-même surmontée de deux nappes de travail formées d'éléments de renforcement métalliques inextensibles, parallèles entre eux dans chaque nappe et croisés d'une nappe à la suivante en faisant avec la direction circonférentielle des angles compris entre 10° et 45°. Les dites nappes de travail, formant l'armature de travail, sont généralement recouvertes d'au moins une nappe dite de protection , formée, dans la plupart des cas, d'éléments de renforcement métalliques extensibles ou dits élastiques.

Dans le cas de pneumatique pour véhicules "Poids-Lourds", une seule nappe de protection est présente et ses éléments de protection sont généralement orientés dans la même direction et avec le même angle en valeur absolue que ceux des éléments de renforcement de la nappe de travail radialement la plus à l'extérieur, et généralement moins large que la nappe de travail radialement la plus extérieure la moins large. De telles armatures de sommet ne sont pas assez endurantes , dans le sens où, les pneumatiques roulant sous fortes contraintes de dérive, apparaissent et se propagent de nombreuses cassures de caoutchouc entre les bords des deux nappes de sommet de travail.

Le brevet FR 1 435 804 de la demanderesse, en vue d'éviter les décollements des extrémités de l'armature de sommet lorsque le pneumatique est soumis à un roulage à grande vitesse, enseigne de disposer de chaque côté de ladite armature une nappe étroite de câbles formant avec les câbles d'armature de carcasse un angle pouvant être compris entre 40° et 70°. Ladite nappe peut être placée partiellement soit au-dessus de l'armature de sommet, soit entre les deux nappes de travail, soit entre l'armature de sommet et l'armature de carcasse. Le matériau constituant les câbles peut être quelconque.

La demande japonaise JP 63/125 406, pour améliorer l'uniformité, préconise l'utilisation de petites nappes de renforcement des bords de l'armature de travail, les dites nappes étant constituées d'éléments de renforcement en fibre inorganique telle que la fibre de carbone ou la fibre de verre, orientés parallèlement aux éléments de la nappe de travail radialement extérieure.

Le brevet US 5 435 369, en vue de prévenir les séparations en bouts de nappes de sommet, enseigne de recouvrir les extrémités des deux nappes les plus larges de petites nappes additionnelles d'éléments de renforcement en matériau choisi parmi l'acier, le polyamide aromatique, le Nylon,....etc.....et orientés par rapport à la direction circonférentielle avec un angle pouvant être compris entre 0° et 55°.

Le document EP 0 730 987 décrit un pneumatique selon le préambule de la revendication 1.

Les progrès réalisés en durée de vie (nombre de kilomètres parcourus) sur usure des enveloppes "Poids-Lourds", ainsi que la possibilité d'un rechapage ultérieur, aisé et économique, demande une armature de sommet dont la résistance à la séparation entre les bords de nappes de travail soit améliorée.

Ainsi, le pneumatique conforme à l'invention, comprend une armature de carcasse radiale surmontée radialement d'une armature de sommet composée d'au moins une armature de travail formée de deux nappes d'éléments de renforcement métalliques inextensibles, parallèles entre eux dans chaque nappe et croisés d'une nappe à la suivante en formant avec la direction circonférentielle des angles α₁ et α₂ compris entre 10° et 45°, les dites nappes de travail ayant des largeurs axiales L₁ et L₂ et d'au moins une nappe, dite de protection, de largeur axiale L₃ telle que L₃ < L₂ < L₁, les dits éléments de renforcement de la nappe de protection étant inclinés dans la même direction que les éléments de renforcement de la nappe de travail radialement adjacente, est caractérisé en ce qu'est disposée de chaque côté du plan équatorial, dans le prolongement axial de la nappe de protection une nappe additionnelle d'éléments de renforcement métalliques inextensibles de même direction que celle des éléments de renforcement de la nappe de travail radialement extérieure et faisant avec la direction circonférentielle un angle α₄ supérieur en valeur absolue à l'angle α₂ des éléments de ladite nappe de travail d'au moins 5°, la largeur axiale LA de chaque dite nappe additionnelle étant telle que son extrémité axialement extérieure soit distante du plan équatorial d'une quantité supérieure à la demi-largeur de la nappe de travail la moins large et radialement extérieure, et telle qu'elle ne recouvre pas l'extrémité axiale de la nappe de travail la plus large et radialement à l'intérieur, ladite extrémité axialement extérieure de ladite nappe additionnelle étant située à une distance du plan équatorial du pneumatique comprise entre 42,5 et 47,5% de la largeur axiale L₁ de la nappe de travail la plus large et radialement à l'intérieur.

Comme connu en soi, l'addition entre armature de travail et armature de carcasse d'une nappe dite de triangulation, peut être avantageuse, ladite nappe étant formée d'éléments métalliques inextensibles fortement inclinés par rapport à la direction circonférentielle avec un angle pouvant être compris entre 45° et 90°, et ayant une largeur axiale L₀ inférieure à la largeur L₁ de la première nappe de travail.

De manière préférentielle, la différence α₄ - α₂ n'est pas supérieure à 20°. Si ladite différence est inférieure à 5°, la résistance à la séparation entre nappes de travail n'est pas améliorée ; si la différence est supérieure à 20°, il est possible de parvenir à l'effet contraire de l'effet recherché, c'est-à-dire pénaliser la séparation entre bords des nappes de sommet de travail.

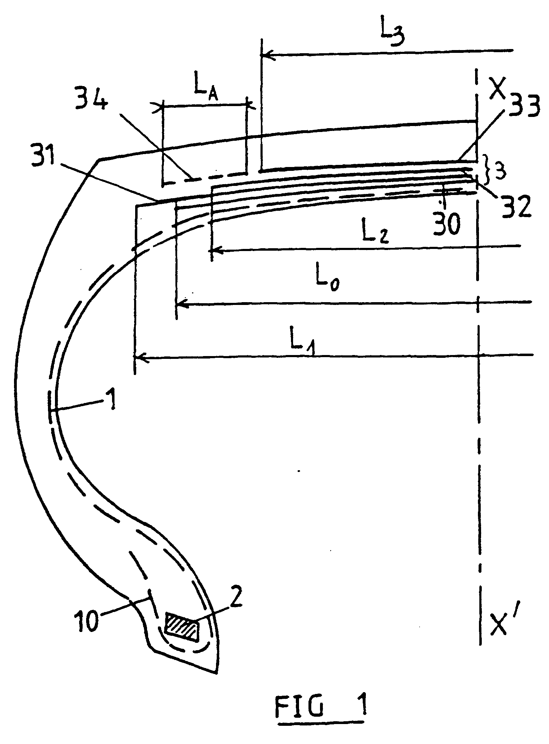

Les caractéristiques de l'invention seront mieux comprises à l'aide de la description d'un mode de réalisation et illustré par le dessin annexé comprenant une figure unique 1.

Le pneumatique P de dimension 385/65.R.22,5. X comprend une armature de carcasse radiale composée d'une seule nappe 1 de câbles métalliques inextensibles, c'est-à-dire des câbles présentant sous une force de traction égale à 10% de la force de rupture un allongement au plus égal à 0,2%. Ladite armature de carcasse est ancrée dans chaque bourrelet à une tringle 2 pour former un retournement 10. Elle est radialement à l'extérieur surmontée d'une armature de sommet 3 comprenant radialement de l'intérieur à l'extérieur :
- une première nappe de sommet 30 dite de triangulation et formée de câbles métalliques inextensibles en acier, orientés d'un angle α₀, égal dans le cas décrit à 50°,
- surmontant ladite nappe 30, une première nappe de sommet de travail 31, formée de câbles métalliques inextensibles en acier faisant avec la direction circonférentielle un angle α₁ égal à 18°, les câbles de la nappe de triangulation 30 et de la première nappe de travail ayant la même direction,
- puis une deuxième nappe de sommet de travail 32 formée de câbles métalliques identiques à ceux de la première nappe 31, et faisant avec la direction circonférentielle un angle α₂, opposé à l'angle α₁ et, dans le cas montré, égal en valeur absolue audit angle α₁ de 18°, (mais pouvant être différent dudit angle α₁),
- une dernière nappe 33 continue axialement de câbles métalliques en acier dits élastiques, orientés par rapport à la direction circonférentielle d'un angle α₃ de même sens que l'angle α₂, et égal en valeur absolue audit angle α₂, cette dernière nappe étant une nappe dite de protection, les câbles métalliques dits élastiques étant des câbles ayant à la rupture un allongement relatif au moins égal à 4% ;
- de chaque côté du plan équatorial XX' et dans le prolongement axial de la nappe 33, une nappe additionnelle 34 de câbles métalliques en acier inextensibles, parallèles entre dans chaque nappe et faisant avec la direction circonférentielle un angle α₄ de même sens que les angles α₃ et α₂ formés par les câbles respectivement des nappes 32 et 33, mais supérieur aux dits angles d'une quantité égale à 8°, puisque égal à 26°.

La largeur axiale L₁ de la première nappe de travail 31 est égale à 0,78 fois la largeur axiale maximale S₀ de la fibre moyenne de l'armature de carcasse (1), soit 280 mm, ce qui est, pour un pneumatique de forme usuelle, inférieure à la largeur de la bande de roulement, qui est égale, dans le cas étudié, à 286 mm. La largeur axiale L₂ de la deuxième nappe de travail 32 est inférieure à la largeur L, , puisqu égale à 212 mm. La largeur axiale L₀ de la nappe de triangulation 30 est égale à 270 mm, ce qui représente 0,75 S₀. La largeur L₃ de la nappe de protection 33 est inférieure à la largeur L₂ de la nappe de travail 32 la moins large et radialement adjacente, et égale à 120 mm. Quant à la largeur axiale de chaque nappe additionnelle 34, elle est égale à 70 mm ; la dite nappe 34 est approximativement centrée sur l'extrémité de la nappe de travail 32 la moins large et radialement à l'extérieur.

Les pneumatiques ainsi décrits ont été testés en endurance à l'aide de roulages sur véhicules et sous fortes contraintes de dérive. Alors que les pneus témoins, possédant une nappe de protection moins large que la deuxième nappe de travail et formée d'éléments de renforcement faisant avec la direction circonférentielle le même angle que les éléments de ladite nappe de travail, ont réalisé en moyenne 6 225 km, les pneus de l'invention ont roulé pendant 8660 km soit un gain d'environ 39%, sans que les dits pneus soient pénalisés au niveau des séparations entre les deux nappes de travail.

## Revendications

1. Pneumatique P, comprenant une armature de carcasse radiale (1) surmontée d'une armature de sommet (3) composée d'au moins une armature de travail formée de deux nappes (31, 32) d'éléments de renforcement métalliques inextensibles, parallèles entre eux dans chaque nappe et croisés d'une nappe (31) à la suivante (32) en formant avec la direction circonférentielle des angles α₁ et α₂ compris entre 14° et 45°, les dites nappes de travail ayant des largeurs axiales L₁ et L₂ et d'au moins une nappe (33), dite de protection, de largeur axiale L₃ telle que L₃ < L₂ < L₁, les dits éléments de renforcement de la nappe de protection (33) étant inclinés dans la même direction que les éléments de renforcement de la nappe de travail (32) radialement adjacente, **caractérisé en ce qu'**est disposée de chaque côté du plan équatorial XX', dans le prolongement axial de la nappe de protection (33) une nappe additionnelle (34) d'éléments de renforcement métalliques inextensibles, de même direction que celle des éléments de renforcement de la nappe de travail (32) radialement extérieure et faisant avec la direction circonférentielle un angle α₄ supérieur en valeur absolue à l'angle α₂ des éléments de ladite nappe de travail (32) d'au moins 5°, la largeur axiale L_{A} de chaque dite nappe additionnelle (34) étant telle que son extrémité axialement extérieure soit distante du plan équatorial XX' d'une quantité supérieure à la demi-largeur de la nappe de travail (32) la moins large et radialement extérieure, et telle qu'elle ne recouvre pas l'extrémité axiale de la nappe de travail (31) la plus large et radialement à l'intérieur, ladite extrémité axialement extérieure de ladite nappe additionnelle (34) étant située à une distance du plan équatorial du pneumatique comprise entre 42,5 et 47,5% de la largeur axiale L₁ de la nappe de travail (31) la plus large et radialement à l'intérieur.

2. Pneumatique selon la revendication 1, **caractérisé en ce qu'**il comporte entre l'armature de travail (3) et l'armature de carcasse (1) une nappe (30), dite de triangulation, et formée d'éléments métalliques inextensibles fortement inclinés par rapport à la direction circonférentielle avec un angle α₀ compris entre 45° et 90°, et ayant une largeur axiale L₀ inférieure à la largeur L₁ de la première nappe de travail (31).

3. Pneumatique selon la revendication 1, **caractérisé en ce que** la différence α₄ - α₂ entre l'angle des éléments de renforcement de la nappe additionnelle (34) et l'angle des éléments de renforcement de la nappe de travail (32) la moins large et radialement à l'extérieur n'est pas supérieure à 20°.

## Patentansprüche

1. Luftreifen P, der eine radiale Karkassenbewehrung (1) besitzt, über der eine Scheitelbewehrung (3) angeordnet ist, die aus mindestens einer Funktionsbewehrung, welche von zwei Lagen (31, 32) von nicht dehnbaren Verstärkungselementen aus Metall gebildet wird, die in den einzelnen Lagen zueinander parallel sind und sich von einer Lage (31) zur nächsten (32) kreuzen, wobei sie mit der Umfangsrichtung Winkel α₁ und α₂ im Bereich von 10° bis 45° bilden, und wobei die Funktionslagen axiale Breiten L₁ und L₂ aufweisen, und mindestens einer sogenannten Schutzlage (33) zusammengesetzt ist, die eine axiale Breite L₃ aufweist, die so ist, dass L₃ < L₂ < L₁, wobei die Verstärkungselemente der Schutzlage (33) in der gleichen Richtung geneigt sind wie die Verstärkungselemente der radial benachbarten Funktionslage (32), **dadurch gekennzeichnet, dass** auf jeder Seite der Äquatorialebene XX' in axialer Verlängerung der Schutzlage (33) eine zusätzliche Lage (34) von nicht dehnbaren Verstärkungselementen aus Metall angeordnet ist, deren Ausrichtung der Ausrichtung der Verstärkungselemente der radial außen liegenden Funktionslage (32) entspricht und die mit der Umfangsrichtung einen Winkel α₄ bilden, dessen Absolutwert um mindestens 5° größer ist als der Absolutwert des Winkels α₂ der Elemente der Funktionslage (32), wobei die axiale Breite L_{A} jeder zusätzlichen Lage (34) so ist, dass ihr axial äußeres Ende von der Äquatorialebene XX' um einen Betrag beabstandet ist, der größer ist als die halbe Breite der Funktionslage (32), die die geringste Breite aufweist und in radialer Richtung außen liegt, und so, dass sie das axiale Ende der breitesten und radial innen liegenden Funktionslage (31) nicht bedeckt, wobei das axial äußere Ende der zusätzlichen Lage (34) in einem Abstand von der Äquatorialebene des Luftreifens angeordnet ist, der im Bereich von 42,5 bis 47,5 % der axialen Breite L₁ der breitesten und radial innen liegenden Funktionslage (31) liegt.

2. Luftreifen nach Anspruch 1, **dadurch gekennzeichnet, dass** er zwischen der Funktionsbewehrung (3) und der Karkassenbewehrung (1) eine sogenannten Triangulierungslage (30) aufweist, die von in Bezug auf die Umfangsrichtung mit einem Winkel α₀ von 45° bis 90° stark geneigten, nicht dehnbaren Metallelementen gebildet wird und die eine axiale Breite L₀ aufweist, die kleiner ist als die Breite L₁ der ersten Funktionslage (31).

3. Luftreifen nach Anspruch 1, **dadurch gekennzeichnet, dass** die Differenz α₄ - α₂ zwischen dem Winkel der Verstärkungselemente der zusätzlichen Lage (34) und dem Winkel der Verstärkungselemente der radial außen liegenden Funktionslage (32) mit der geringsten Breite nicht größer ist als 20°.

## Claims

1. A tyre P, comprising a radial carcass reinforcement (1) surmounted by a crown reinforcement (3) formed of at least one working reinforcement formed of two plies (31, 32) of inextensible metallic reinforcement elements, which are parallel to each other within each ply and are crossed from one ply (31) to the next (32), forming with the circumferential direction angles α₁ and α₂ of between 10° and 45°, said working plies having axial widths L₁ and L₂, and of at least one ply (33), referred to as a protective ply, of axial width L₃ such that L₃ < L₂ < L₁, said reinforcement elements of the protective ply (33) being inclined in the same direction as the reinforcement elements of the radially adjacent working ply (32), **characterised in that** there is arranged on either side of the equatorial plane XX', in the axial extension of the protective ply (33), an additional ply (34) of inextensible metallic reinforcement elements of the same direction as that of the reinforcement elements of the radially outer working ply (32) and forming with the circumferential direction an angle α₄ greater in absolute value than the angle α₂ of the elements of said working ply (32) by at least 5°, the axial width L_{A} of each said additional ply (34) being such that its axially outer end is distant from the equatorial plane XX' by an amount greater than half the width of the least wide and radially outer working ply (32), and such that it does not cover the axial end of the widest and radially inner working ply (31), said axially outer end of said additional ply (34) being located at a distance from the equatorial plane of the tyre of between 42.5 and 47.5% of the axial width L₁ of the widest working ply (31) which is radially to the outside.

2. A tyre according to Claim 1, **characterised in that** it comprises between the working reinforcement (3) and the carcass reinforcement (1) what is called a triangulation ply (30), formed of inextensible metallic elements inclined greatly relative to the circumferential direction with an angle α₀ of between 45° and 90°, and having an axial width L₀ which is less than the width L₁ of the first working ply (31).

3. A tyre according to Claim 1, **characterised in that** the difference α₄ - α₂ between the angle of the reinforcement elements of the additional ply (34) and the angle of the reinforcement elements of the working ply (32) which is least wide and radially to the outside is not greater than 20°.
